# FASCICULE DE BREVET EUROPEEN

(11) **EP 1 507 920 B1**
(45) Date de publication et mention de la délivrance du brevet: **16.11.2005**
(21) Numéro de dépôt: 03755188.4
(22) Date de dépôt: 23.05.2003
(51) Int. Cl.: D06N 7/00, B32B 5/26, B32B 7/14, E04F 15/10

(54) **REVETEMENT DE SOLS AVEC ENVERS TEXTILE**
BODENBELAG MIT TEXTILRÜCKEN
FLOORING WITH TEXTILE BACKING

(30) Priorité: 27.05.2002 FR 0206577
(43) Date de publication de la demande: 23.02.2005
(73) Titulaire: GERFLOR, 69100 Villeurbanne (FR)
(72) Inventeur: CEYSSON, Olivier, F-84500 Bollene (FR); ARRIGONI, Jacques, F-26790 Tulette (FR)
(74) Mandataire: Dupuis, François
(86) Numéro de dépôt international: PCT/FR2003/001562
(87) Numéro de publication internationale: WO 2003/100161

(56) Documents cités:
- WO-A-02/10504
- WO-A-98/14656
- GB-A- 1 289 921

## Description

### Domaine technique

L'invention se rattache au secteur technique des revêtements de sols en matière plastique, et présentant des propriétés de confort à la marche, d'isolation acoustique et thermique.

### Techniques antérieures

Il est connu de réaliser des revêtements de sols constitués d'une structure de base en matière thermoplastique souvent renforcée par un matériau textile noyé dans la masse de ladite matière.

Par ailleurs, pour améliorer le confort et conférer des caractéristiques d'isolation acoustique et thermique et de souplesse au revêtement, celui-ci peut être associé sur sa face envers à une sous-couche, par exemple une sous-couche en mousse.

De plus, la face apparente est recouverte d'une couche de finition, conférant à l'ensemble des propriétés spécifiques, telles que résistance aux UV, tenue à l'encrassement, à la rayure, au trafic, à l'abrasion ...

Ces revêtements de sols peuvent être fabriqués par différentes techniques, telles que enduction, calandrage, pressage ou extrusion.

Pour la réalisation de revêtement de sol par la technique d'enduction, on réalise un support de base en imprégnant une structure textile de renforcement, constituée en général par un non tissé, cette structure étant très souvent à base de fibres de verre, mais également à base de polymères synthétiques, tels que fibres de polyester, polyamide ou polypropylène.

L'enduction est réalisée à partir d'une composition de plastisols, le plus souvent à base de PVC, mais pouvant être également à base d'acryliques, de polyuréthannes, de polyoléfines, permettant d'obtenir une surface lisse et plane.

Après formation du support de base, on réalise la ou les couches superficielles destinées à apporter le décor et la résistance à l'usure, ainsi que la couche d'envers, permettant d'assurer la finition (cas des couches compactes) ou le confort et/ou l'isolation, par association à une sous-couche à base de mousses mécaniques ou chimiques.

Outre les revêtements de sols dont la surface apparente est plane, il a été proposé, depuis des décennies, comme cela ressort notamment du GB-A.1 520 964, de l'US-A-3 399 106, de l'US-A -4 244 899, de l'EP-A-0 003 965 et de FR 2 557 905, de réaliser des revêtements de sol présentant des effets en relief, qui consistent, lors de la fabrication, à interposer entre la structure de base imprégnée de résine, et les couches de surface, une couche de mousse chimique, sur laquelle on imprime un décor à partir d'encres dont certaines contiennent des inhibiteurs d'expansion.

Après application de la couche d'usure sur le décor ainsi réalisé, on gélifie l'ensemble des couches, ce qui provoque une expansion différente entre les zones imprimées inhibées et celles imprimées non inhibées, entraînant la production d'un décor en relief, l'expansion étant moindre dans les zones imprimées inhibées.

De tels revêtements de sols, qui ont connu un très grand développement, sont couramment utilisés de nos jours, présentent cependant des caractéristiques d'isolation acoustique et thermique jugées parfois insuffisantes.

Pour résoudre ce problème, la seule proposition envisagée a donc consisté à rapporter sur la face envers une couche de mousse mécanique ou chimique, qui, dans le cas d'utilisation de mousse de basse densité, peut être préjudiciable à la solidité du revêtement et est parfois mal perçue par un acheteur potentiel, compte tenu du toucher plastique qu'apporte une telle sous-couche.

Pour répondre à ces inconvénients, le demandeur a ainsi développé un perfectionnement consistant à réaliser de manière spécifique la face envers destinée à être en contact avec le sol, et ce dans le cadre du Brevet Français n° 00.09841.

Le matériau selon l'invention se caractérise en ce que la face envers destinée à être en contact avec le sol est constituée par une nappe textile, de préférence du type non tissé, la liaison entre la structure textile et la face envers du support de base étant réalisée par l'intermédiaire d'une couche additionnelle de plastisol qui pénètre, sur une partie minoritaire de l'épaisseur de la structure textile et qui, après gélification, assure la solidarisation de ce textile à l'envers du support de base en matière thermoplastique.

Cette technologie est exploitée à grande échelle par le demandeur, et ce de manière satisfaisante.

Cependant, le demandeur a recherché à optimiser la conception et la fabrication de ces revêtements de sols et ce pour répondre à différents objectifs.

Un premier objectif était d'élargir la technologie de fabrication de ces revêtements de sols à envers textile à d'autres méthodes de fabrication telles que le calandrage, le pressage, l'extrusion.

Un second objectif était de simplifier le procédé de fabrication actuel résultant de la mise en oeuvre d'une couche additionnelle de plastisol.

Un troisième objectif de l'invention était d'améliorer les conditions de pose du revêtement obtenu selon le brevet Français n° 00.09841 et surtout la qualité de présentation dudit revêtement au sol. En effet, on a pu constater la formation de pliures ou d'amorces de plis lorsque le revêtement incorpore une couche additionnelle de plastisol.

Un autre objectif selon l'invention était de tenir compte des contraintes environnementales liées par exemple aux diffusions résultant des composés organiques volatiles.

A partir de ces objectifs, le demandeur a recherché une optimisation de son procédé actuel faisant l'objet du brevet précité, et s'est intéressé à la technologie des poudres.

Divers travaux ont été développés à partir d'utilisation de poudre pour des revêtements de sols. On cite, par exemple, les publications suivantes : WO 01/60934, FR 2.734.300, FR 2.639.001, FR 2.625.236, FR 2.619.132, FR 2.601.355, WO 97.09358, FR 2.514.015.

Par rapport aux objectifs du demandeur rappelés précédemment, aucun des documents précités n'est susceptible d'y répondre de manière satisfaisante.

### Exposé d'invention

Les recherches complémentaires du demandeur ont ainsi permis d'optimiser le procédé de fabrication initial visé dans le brevet Français n° 00.09841 du demandeur.

Ainsi, selon l'invention et une première caractéristique, le revêtement de sols comportant un support de base et dont la face apparente est constituée par un revêtement de surface conférant le décor et la résistance à l'usure de l'article et la face envers destinée à être en contact avec le sol, est constitué par une nappe textile, la liaison entre la structure textile et la surface envers du support de base étant réalisée par l'intermédiaire d'une couche additionnelle, est remarquable en ce que ladite couche additionnelle est un primaire disposé et réparti de manière discontinue entre ladite face envers et ladite structure textile assurant leur adhérence avec une pénétration limitée dans l'épaisseur de la nappe textile afin d'autoriser le glissement des fibres de la nappe textile entre elles dans les zones de pliure du revêtement.

Selon une autre caractéristique, le primaire utilisé est établi sous forme d'une poudre projetée, pulvérisée ou saupoudrée sur au moins une des faces en regard de la nappe textile ou de la face envers réceptrice.

Ainsi, ce primaire choisi doit garantir l'adhérence par sa nature adaptée aux deux faces envers et nappe textile. Ainsi, ce primaire se trouve principalement sous forme de poudre ou d'émulsion ou de solution fondue à chaud, et ce dans une nature de matières telles que polyester, polyamide, acrylique, éthylène vinyl acétate, polyoléfine et matières similaires.

Ce choix particulier de primaire avec une faible dépose de l'ordre de 15 à 50 grammes par m2 permet en outre de limiter sa pénétration dans l'épaisseur de la nappe textile. Cette disposition combinée, avec sa répartition sur une partie discontinue seulement de la surface de liaison considérée, entre la nappe textile et la face envers permet d'améliorer le glissement des fibres entre elles apparaissant en particulier dans la ou les zones de pliures du revêtement lors de sa pose. Le phénomène de glissement des fibres les unes par rapport aux autres permet ainsi d'éviter le ou les risques de marquage par pliures qui sont rédhibitoires, et que l'on rencontre lorsque la couche d'envers est de forte épaisseur et/ou de faible densité (effet bi-lame important et problème de rayon de courbure).

Le support de base peut être en matière thermoplastique. La surface envers dudit support de base est constituée en matériaux de nature feutre, carton, polymères ou autres. Ainsi, le support de base peut être intégralement en matière plastique dans sa face apparente et sa surface envers. Le support de base peut être partiellement en matière plastique dans sa face apparente.

De par la sélection de l'invention relatif au primaire et la non nécessité de recouvrement total des parties de nappe textile et de face d'envers en regard, la dépose de primaire, quelles qu'en soient les modalités, permet de diminuer le taux de C.O.V c'est-à-dire de composés organiques volatiles qui proviennent des adjuvants du plastisol, selon le brevet français antérieur.

La mise en oeuvre de l'invention peut être effectuée par tout procédé approprié tel que par enduction, calandrage, pressage, extrusion.

Ainsi, l'optimisation apportée selon l'invention est importante et offre encore une qualité supérieure de revêtement de sol tout en permettant une mise en oeuvre du procédé de fabrication dans des conditions de coût avantageuses.

## Revendications

1. Revêtement de sols comportant un support de base et dont la face apparente est constituée par un revêtement de surface conférant le décor et la résistance à l'usure de l'article et la face envers destinée à être en contact avec le sol, est constituée par une nappe textile, la liaison entre la structure textile et la surface envers du support de base étant réalisée par l'intermédiaire d'une couche additionnelle, est **caractérisé en ce que** ladite couche additionnelle est un primaire disposé et réparti de manière discontinue entre ladite face envers et ladite structure textile assurant leur adhérence avec une pénétration limitée dans l'épaisseur de la nappe textile afin d'autoriser le glissement des fibres de la nappe textile entre elles dans les zones de pliure du revêtement.

2. Revêtement de sols selon la revendication 1, **caractérisé en ce que** le primaire choisi garantissant l'adhérence par sa nature adaptée aux deux faces envers et nappe textile se trouve principalement sous forme de poudre ou d'émulsion ou de solution fondue à chaud.

3. Revêtement de sols selon la revendication 1, **caractérisé en ce que** le primaire est choisi dans une nature de matières telles que polyester, polyamide, acrylique, éthylène vinyle acétate, polyoléfine et matières similaires.

4. Revêtement de sols selon la revendication 2, **caractérisé en ce que** le primaire utilisé est établi sous forme d'une poudre projetée, pulvérisée ou saupoudrée sur au moins une des faces en regard de la nappe textile ou de la face envers réceptrice.

5. Revêtement de sols selon l'une quelconque des revendications 1 à 4, **caractérisé en ce que** la surface envers du support de base est constituée de matériaux de nature feutre.

6. Revêtement de sols selon l'une quelconque des revendications 1 à 4, **caractérisé en ce que** la surface envers du support de base est constituée de matériaux de nature cartons.

7. Revêtement de sols selon l'une quelconque des revendications 1 à 4, **caractérisé en ce que** la surface envers du support de base est constituée de matériaux de nature polymère.

8. Revêtement de sols selon l'une quelconque des revendications 1 à 4 et 7, **caractérisé en ce que** le support de base est intégralement en matière plastique.

9. Revêtement de sols selon l'une quelconque des revendications 1 à 8, **caractérisé par** sa mise en oeuvre par tout procédé calandrage, extrusion, enduction, pressage.

## Patentansprüche

1. Bodenbelag, der einen Grundträger umfasst und dessen sichtbare Seite aus einer Oberseitendecke besteht, die das Dekor und die Verschleißfestigkeit des Artikels verleiht, und dessen linke Seite, die für den Kontakt mit dem Boden bestimmt ist, aus einem Textilvlies besteht, wobei die Verbindung zwischen der Textilstruktur und der linken Seite des Grundträgers mittels einer zusätzlichen Schicht ausgeführt ist, **dadurch gekennzeichnet, dass** die zusätzliche Schicht ein Primer ist, der zwischen der linken Seite und der Textilstruktur vorgesehen und diskontinuierlich verteilt ist, der ihre Haftung mit einem begrenzten Eindringen in die Dicke des Textilvlieses sicherstellt, um das gleiten der Fasern des Textilvlieses untereinander in den Krümmungsbereichen des Belags zu gestatten.

2. Bodenbelag nach Anspruch 1, **dadurch gekennzeichnet, dass** der gewählte Primer, der die Haftung durch seine an die beiden linken Seiten und Textilvlies angepasste Beschaffenheit gewährleistet, hauptsächlich in Form eines Pulvers oder einer Emulsion oder einer mit Wärme geschmolzenen Lösung vorliegt.

3. Bodenbelag nach Anspruch 1, **dadurch gekennzeichnet, dass** der Primer aus einer Art von Materialien, wie Polyester, Polyamid, Acryl, Ethylenvinylacetat, Polyolefin und ähnlichen Materialien, ausgewählt ist.

4. Bodenbelag nach Anspruch 2, **dadurch gekennzeichnet, dass** der verwendete Primer in Form eines Pulvers vorgesehen ist, das auf wenigstens eine der dem Textilvlies oder der aufnehmenden linken Seite gegenüberliegenden Seiten aufgespritzt, aufgesprüht oder aufgestreut wird.

5. Bodenbelag nach einem der Ansprüche 1 bis 4, **dadurch gekennzeichnet, dass** die linke Seite des Grundträgers aus filzartigen Materialien besteht.

6. Bodenbelag nach einem der Ansprüche 1 bis 4, **dadurch gekennzeichnet, dass** die linke Seite des Grundträgers aus pappeartigen Materialien besteht.

7. Bodenbelag nach einem der Ansprüche 1 bis 4, **dadurch gekennzeichnet, dass** die linke Seite des Grundträgers aus polymerartigen Materialien besteht.

8. Bodenbelag nach einem der Ansprüche 1 bis 4 und 7, **dadurch gekennzeichnet, dass** der Grundträger vollständig aus Kunststoff besteht.

9. Bodenbelag nach einem der Ansprüche 1 bis 8, **gekennzeichnet durch** seine Verwirklichung **durch** jedes Kalandrier-, Extrudier-, Beschichtungs-, Pressverfahren.

## Claims

1. A flooring including a base support and the apparent face of which consists of a surface coating providing the decorative pattern and the wear resistance of the article and the back face of which is intended to be in contact with the floor and consists of a textile web, the bond between the textile structure and the back surface of the base support being achieved by means of an additional layer, **characterised in that** said additional layer is a primer applied and spread discontinuously between said back face and said textile structure ensuring their adhesion with a penetration limited within the thickness of the textile web to allow the fibres of the textile web to slide in relation to each other in the flooring fold zones.

2. A flooring according to claim 1, **characterised in that** the selected primer guaranteeing the adhesion by its nature adapted to the two faces, the back face and the textile web, is mainly in the form of a powder or emulsion or a hot molten solution.

3. A flooring according to claim 1, **characterised in that** the primer is selected from a type of material such as a polyester, polyamide, acrylic, ethylene-vinyl acetate, polyolefine or similar materials.

4. A flooring according to claim 2, **characterised in that** the primer used is established in the form of a powder blasted, sprayed or sprinkled onto at least one of the faces opposite the textile web or the receiving back face.

5. A flooring according to any one of claims 1 to 4, **characterised in that** the back surface of the base support consists of felt-type materials.

6. A flooring according to any one of claims 1 to 4, **characterised in that** the back surface of the base support consists of cardboard-type materials.

7. A flooring according to any one of claims 1 to 4, **characterised in that** the back surface of the base support consists of polymer-type materials.

8. A flooring according to any one of claims 1 to 4 and 7, **characterised in that** the base support is made completely from a plastic material.

9. A flooring according to any one of claims 1 to 8, **characterised by** its implementation by any calendering, extrusion, coating and pressing process.
